# DEMANDE DE BREVET EUROPEEN

(11) **EP 2 098 935 A2**
(43) Date de publication de la demande: **09.09.2009**
(21) Numéro de dépôt: 09370005.2
(22) Date de dépôt: 05.03.2009
(51) Int. Cl.: G05B 19/425

(54) **Moteur à gestion électronique des fins de course et procédé pour l'installation d'un dispositif d'ouverture et de fermeture, tel que notamment un volet roulant comprenant un tel moteur**

(30) Priorité: 06.03.2008 FR 0801229
(71) Demandeur: Deprat Jean SA, 59650 Villeneuve d'Ascq (FR)
(72) Inventeur: Kimpe, Florent, 59650 Villeneuve d'Ascq (FR); Couturier, Philippe, 59650 Villeneuve d'Ascq (FR); Couzinet, Laurent, 59650 Villeneuve d'Ascq (FR)
(74) Mandataire: Duthoit, Michel Georges André

(57) **Abrégé**

L'invention concerne un moteur à gestion électronique de fins de course, ledit moteur comprenant au moins une électronique de commande avec d'une part, un circuit électronique pour l'enregistrement des fins de course et la gestion desdites fins de course lors de l'actionnement dudit moteur, et d'autre part, des moyens pour détecter le déplacement du rotor du moteur, ledit moteur comprenant un mode d'apprentissage automatique des fins de course au cours duquel les fins de course sont repérées par la détection et la reconnaissance automatique des positions de deux butées physiques ainsi qu'un mode normal d'actionnement au cours duquel le circuit électronique provoque l'arrêt du moteur lorsque les positions de fins de course sont approchées par l'organe mobile.

Selon l'invention, le câblage dudit moteur assure une alimentation permanente de l'électronique de commande, ladite électronique de commande étant programmée pour comparer l'écart de position entre les fins de course et une valeur seuil (Vs) d'écart déterminée afin de basculer ou rester en mode d'apprentissage automatique des fins de course tant que l'écart de position entre les deux fins de course mémorisées est inférieur à une valeur seuil d'écart déterminée, ledit moteur étant en mode normal d'actionnement autrement.

## Description

L'invention concerne un moteur à gestion électronique des fins de course, notamment à fins de course automatiques, ainsi qu'un procédé pour l'installation d'un dispositif d'ouverture et de fermeture, tel que notamment un volet roulant comprenant un tel moteur.

Dans le domaine des volets roulants, on connaît des moteurs à fins de course automatiques. On entend par moteur à fins de course automatiques, un moteur au sens large, comprenant une partie mécanique avec d'une part un stator et un rotor, voire un réducteur, et d'autre part l'électronique de commande avec notamment une carte électronique et un codeur angulaire, par exemple, du type magnétique ou optique pour la détection du déplacement du rotor.

Ces moteurs permettent un apprentissage des fins de course au cours duquel les positions des butées physiques sont repérées et enregistrées automatiquement comme fins de course. La variation plus ou moins rapide d'un paramètre du moteur peut être interprétée comme la présence d'un obstacle. Par exemple, la variation du facteur de puissance, du déphasage, de l'intensité ou encore de la vitesse du moteur peut être interprétée comme une butée physique rencontrée par l'organe manoeuvré.

Une fois basculé en mode normal d'actionnement, l'opérateur peut commander le volet roulant à la montée ou à la descente, notamment via une commande filaire telle qu'un interrupteur inverseur mural, ou encore une commande sans fil via une télécommande.

En raison des efforts subis lorsque le tablier rencontre les butées physiques, et afin d'éviter l'altération du mécanisme, l'électronique de commande coupe l'alimentation du moteur à une fraction de rotation avant d'atteindre des fins de course. A cet instant, bien souvent, l'arrêt du moteur n'est pas net, le rotor poursuivant sa rotation sur une fraction de tour ou plus, après la coupure d'alimentation, sous l'effet de l'inertie.

Aujourd'hui, lorsque la commande du moteur est filaire, l'interrupteur commande non seulement l'actionnement du rotor du moteur, dans un sens ou dans l'autre, mais également ferme ou ouvre l'alimentation du moteur, et plus particulièrement l'alimentation de l'électronique de commande. Le moteur, au sens large, comprend la carte électronique et le codeur angulaire est donc alimenté uniquement lorsque le moteur est actionné.

Dans le cas d'une coupure d'alimentation simultanée avec l'arrivée des fins de course, l'organe mobile peut ainsi poursuivre son déplacement sur une fraction de tour, voire plus, sans que celui-ci ne soit pris en compte par l'électronique de commande. La position réelle de l'organe manoeuvré ne correspond plus à celle observée par l'électronique du moteur. La répétition et l'accumulation de ces petites dérives peuvent provoquer avec la durée un dysfonctionnement de l'organe manoeuvré.

Aujourd'hui, en vue de l'installation d'un volet roulant répondant à une intégration donnée, il existe dans le domaine du volet roulant une économie verticale regroupant les fabricants, les assembleurs et les installateurs. Les fabricants produisent les différents constituants du volet roulant tels que notamment moteur, coulisses, coffre, verrou antirelevage, tablier de volet roulant, ...

L'assembleur choisit et achète les différents constituants chez les fabricants en vue de répondre à un cahier des charges données en vue d'une intégration donnée. Avant de livrer le volet roulant, l'assembleur doit notamment s'assurer que le produit à livrer fonctionne correctement. Par exemple, l'assembleur s'assure que le tablier monte et descend correctement sous la commande motorisée, en glissant correctement dans les coulisses, sans point dur, sans arc-boutement.

Le produit validé, le volet roulant est ensuite livré à un installateur qui procède à la mise en place du volet roulant sur site. Dans le cas d'un moteur à gestion de fins de course électroniques, notamment automatiques, il entre dans les tâches de l'installateur de procéder à l'enregistrement des fins de course.

On connaît également les moteurs à fins de course réglables, qui font partie, avec les moteurs à fins de course automatiques, de la famille des moteurs à gestion électronique des fins de course. Ces moteurs comprennent une partie mécanique avec d'une part un moteur en soi, avec le stator et le rotor, et d'autre part l'électronique de commande avec une carte électronique et un codeur angulaire pour la détection du déplacement angulaire du rotor.

Tout comme les moteurs à fins de course automatiques, ils présentent un mode de programmation des fins de course au cours duquel les fins de course peuvent être enregistrées et un mode normal d'actionnement au cours duquel la carte électronique coupe l'alimentation des bobinages du moteur lorsque les fins de course sont approchées, voire atteintes par l'organe mobile.

Toutefois les moteurs à fins de course réglables, contrairement aux moteurs à fins de course automatiques, ne permettent pas un apprentissage automatique des fins de course et sont pénalisés par l'obligation d'utiliser préalablement un outil d'apprentissage pour la programmation des fins de course. Lors de la programmation des fins de course, l'utilisateur doit notamment déplacer l'organe mobile jusqu'à la position de fin de course désirée pour permettre l'enregistrement des fins de course. On connaît ainsi du document FR-2.832.451 un moteur à fins de course réglable pour lequel l'ordre de I utilisateur pour enregistrer la fin de course d'ouverture ou de fermeture est mise à profit afin de mettre en concordance le sens de rotation du moteur à la commande émise par le boîtier de commande. Afin que ce procédé de mise en concordance puisse être mis en oeuvre, il est nécessaire que le tablier de volet roulant ne soit pas totalement enroulé ou déroulé initialement. Afin de pallier à cette contrariété, la mise en concordance du sens de rotation n'est effective que dans le cas où la durée d'actionnement entre la position initiale du volet roulant et l'une des fins de course enregistrée soit suffisamment élevée, ou de manière équivalente que la distance parcourue entre la position initiale du volet roulant et l'une des fins de course enregistrée, soit supérieure à une distance donnée.

Le but de la présente invention est de proposer un moteur à gestion électronique des fins de course dont la conception prend en compte une ou plusieurs des différentes phases d'usage du moteur avant son utilisation par le client final et notamment la phase de programmation des fins de course par l'installateur, voire la phase de test chez l'assembleur.

Un autre but de l'invention est de proposer un moteur dont les fins de course peuvent être reprogrammées ultérieurement par l'utilisateur final.

Un autre but de l'installation est de proposer un moteur à fins de course automatiques, à commande filaire, assurant la fiabilité des fins de course au cours du temps, notamment sans dérive.

Un autre but de l'invention est de proposer un moteur prévenant contre l'altération de son mécanisme lors de son actionnement.

D'autres buts et avantages de la présente invention apparaîtront au cours de la présente invention qui va suivre, qui n'est donnée qu'à titre indicatif et qui n'a pas pour but de la limiter.

L'invention concerne un moteur à gestion électronique des fins de course, destiné à commander un organe mobile, ledit moteur comprenant au moins une électronique de commande avec d'une part, un circuit électronique pour l'enregistrement des fins de course et la gestion desdits fins de course lors de l'actionnement dudit moteur, et d'autre part, des moyens pour détecter le déplacement du rotor dudit moteur, ledit moteur comprenant un mode d'apprentissage automatique des fins de course au cours duquel les fins de courses sont repérées par la détection et la reconnaissance automatique des positions de deux butées physiques ainsi qu'un mode normal d'actionnement au cours duquel le circuit électronique provoque l'arrêt du moteur lorsque les positions de fins de course sont approchées par l'organe mobile.

Selon l'invention, le câblage dudit moteur assure une alimentation permanente de l'électronique de commande, et ladite électronique de commande est programmée pour comparer l'écart de position entre les fins de course et une valeur seuil d'écart déterminée afin de basculer ou rester en mode d'apprentissage automatique des fins de course tant que l'écart de position entre les deux fins de course mémorisées est inférieur à une valeur seuil d'écart déterminée, ledit moteur étant en mode normal d'actionnement autrement.

Les fins de courses peuvent être ainsi préprogrammées en usine de telle façon à ce que l'écart entre les positions soit inférieur à la valeur seuil. On s'assure ainsi que le moteur est en mode de programmation automatique des fins de courses lors de la première installation.

Afin de permettre toutefois une phase de test par l'assembleur, et selon un mode de réalisation avantageux, destiné à l'atelier, le moteur peut présenter un mode de fonctionnement spécifique, et plus particulièrement un mode d'actionnement atelier au cours duquel ledit moteur peut être actionné sans enregistrement des fins de course, même si l'écart des positions des fins de course est inférieur à la valeur seuil.

Alternativement ou additionnellement, le moteur peut présenter un mode de fonctionnement spécifique, destiné à l'utilisateur, plus particulièrement un mode d'apprentissage des fins de course utilisateur permettant la modification et l'enregistrement des fins de courses même si l'écart entre les positions des fins de course est supérieur à la valeur seuil. Ce dernier mode de réalisation permet ainsi la reprogrammation des fins de course.

Selon un mode de réalisation avantageux, le moteur est, à commande filaire, équipé d'un interrupteur inverseur, les moyens pour déclencher le ou les modes de fonctionnement spécifiques (e.g mode d'actionnement atelier, mode d'apprentissage des fins de course utilisateur) étant constitués par le circuit électronique et plus particulièrement des moyens de détection de changement d'état de l'interrupteur inverseur, le circuit électronique présentant des moyens pour passer dans le mode de fonctionnement spécifique lors de la détection d'un nombre déterminé d'appuis fugitifs rapprochés sur ledit interrupteur inverseur, supérieur à un, le cas échéant distinct dans le cas d'une pluralité de modes de fonctionnement spécifiques.

L'invention concernera également un procédé pour l'installation d'un dispositif d'ouverture et de fermeture, tel que notamment un volet roulant, comprenant un organe mobile et un moteur à fins de course automatiques conformes à l'invention, pour l'actionnement de l'organe mobile, équipé de deux butées physiques pour l'organe mobile, procédé mettant en oeuvre trois phases de fonctionnement :
- une phase 1, notamment mise en oeuvre par le fabricant de volets roulants dans laquelle on enregistre deux fins de course pour ledit moteur à fins de course automatiques, de telle façon que l'écart de position entre les fins de course soit inférieur à ladite valeur seuil,
- une phase 2, notamment mise en oeuvre par l'assembleur, dans laquelle on provoque le passage du moteur dans le mode d'essai d'actionnement atelier et on actionne le moteur dans un sens ou dans l'autre, sans enregistrement ni modification des fins de course,
- une phase 3, notamment mise en oeuvre par l'installateur dans laquelle on installe le dispositif d'ouverture et de fermeture et on règle de manière automatique les fins de course en commandant vers le haut et vers le bas l'organe mobile jusqu'auxdites butées physiques.

L'invention sera mieux comprise à la lecture de la description suivante accompagnée des dessins en annexe parmi lesquels :
- les figures 1a et 1b sont respectivement des vues de face et de côté, selon une coupe verticale, d'un dispositif d'ouverture et de fermeture comprenant un moteur à gestion électronique des fins de courses conforme à l'invention, l'organe mobile manoeuvré en butée basse,
- les figures 2a et 2b sont respectivement des vues de face et de côté selon une coupe verticale du dispositif d'ouverture et de fermeture illustré aux figures 1a et 1b, l'organe mobile manoeuvré en butée basse,
- la figure 3 est un diagramme schématique illustrant le mode d'apprentissage des fins de course selon l'invention,
- la figure 4 est un diagramme schématique illustrant le mode d'actionnement atelier conforme à l'invention selon un mode de réalisation,
- la figure 5a est un diagramme schématique illustrant le mode d'apprentissage des fins de course utilisateur conforme à l'invention selon un mode de réalisation,
- la figure 5b est un diagramme schématique illustrant le mode d'apprentissage des fins de course utilisateur conforme à l'invention selon un autre mode de réalisation,
- les figures 6 et 7 sont respectivement des exemples du câblage d'un moteur à fins de course automatiques, à commande filaire conforme à l'invention selon un mode de réalisation, le câblage comportant notamment trois fils de commande,
- les figures 8 et 9 sont respectivement des exemples de câblage d'un moteur à fins de course automatiques à commande filaire, le câblage comportant un unique fil de commande,

L'invention concerne un moteur à gestion électronique des fins de course, destiné à commander un organe mobile, comprenant au moins une électronique de commande avec d'une part, un circuit électronique pour l'enregistrement des fins de course et la gestion desdites fins de course lors de l'actionnement dudit moteur, et d'autre part, des moyens pour détecter le déplacement du rotor dudit moteur.

Un tel moteur est par exemple destiné à commander un volet roulant dont le tablier se déplace dans des coulisses entre une position haute et position basse.

Le moteur est, par exemple, du type tubulaire et peut présenter des moyens filaires de commande de l'organe mobile, avec notamment un interrupteur inverseur ; il peut s'agir d'une commande filaire, par exemple du type interrupteur mural avec quatre fils.

Selon une autre variante, la commande du moteur est dite sans fil, effectuée à l'aide d'une télécommande radio.

Les moyens pour détecter le déplacement du rotor sont constitués par un codeur angulaire. Ce codeur angulaire peut être du type optique, comprenant notamment une roue codée par une alternance de segments réfléchissants ou non, associés à une cellule de détection optique. Le codeur angulaire peut être encore du type capteur à effet hall, associé à une roue codée magnétiquement par une alternance de pôles nord/sud.

Le circuit électronique comprend notamment un contrôleur programmable. Il permet la mise en oeuvre d'un mode d'apprentissage automatique des fins de course au cours duquel les fins de course sont repérées par la détection et la reconnaissance automatique des positions de deux butées physiques ainsi qu'un mode normal d'actionnement au cours duquel le circuit électronique, notamment le contrôleur, provoque l'arrêt du moteur lorsque les positions de fins de course sont approchées par l'organe mobile.

Plus particulièrement, les moyens pour détecter le déplacement du rotor, notamment le codeur angulaire, émettent des impulsions qui permettent au circuit électronique, notamment au contrôleur, de connaître la position de l'organe mobile en incrémentant ou décrémentant un registre.

Selon un exemple de réalisation, lors du mode d'apprentissage des fins de course, ce registre peut être notamment mis à zéro lors du repérage de la première fin de course, telle que par exemple la butée basse. Le tablier est ensuite actionné en direction de la deuxième butée physique, le registre s'incrémentant avec le déplacement de l'organe mobile. Lorsque le tablier atteint la deuxième butée physique, à savoir la butée haute, la valeur de ce registre est enregistrée dans un deuxième mémoire ou registre.

Lors du fonctionnement en mode normal d'actionnement de l'organe mobile, le premier registre, dénommé alors compteur de position en temps réel suit le déplacement de l'organe mobile et s'incrémente ou se décrémente en fonction de ses déplacements. De plus, il est continuellement comparé à la valeur du deuxième registre.

Afin d'éviter que le tablier ne bute trop fortement sur la butée physique, les moyens logiques d'actionnement coupent l'alimentation du moteur à une fraction de tour avant la fin de course basse, c'est-à-dire à quelques unités avant que le registre n'atteigne la valeur zéro, dans le cas de la descente du volet roulant. Dans le cas de la montée du volet roulant, l'électronique de commande coupe l'alimentation du moteur une fraction de tour avant que l'organe mobile n'atteigne la butée haute, c'est-à-dire à quelques unités avant que le compteur n'atteigne la valeur de fins de course enregistrées dans la deuxième mémoire.

Selon l'invention, l'électronique de commande est programmée pour comparer l'écart de position entre les fins de course et une valeur seuil Vs d'écart déterminée afin de basculer ou rester en mode d'apprentissage automatique des fins de course tant que l'écart de position entre les deux positions de fins de course mémorisées est inférieur à une valeur seuil Vs d'écart déterminée, ledit moteur étant en mode normal d'actionnement autrement.

Par exemple, cette valeur seuil est enregistrée, selon l'exemple développé ci-dessus dans une troisième mémoire électronique de commande. L'électronique de commande, notamment le contrôleur, compare la valeur du deuxième registre (correspondant à la course maximale du rotor et donc à l'écart de position entre les deux fins de course) et compare cette valeur à la valeur de seuil enregistrée dans le troisième registre. Tant que la valeur du deuxième registre est inférieure à celle du troisième registre, l'électronique de commande maintient le moteur en mode d'apprentissage des fins de course. Dès que la valeur du deuxième registre est supérieure à celle du troisième registre, le moteur descend en mode normal d'actionnement.

Cette disposition permet avantageusement de préprogrammer en usine, chez le fabricant, des fins de course de telle façon que l'écart entre ces positions soit inférieur à la valeur seuil. On s'assure ainsi que le moteur est en mode d'apprentissage des fins de course lors de sa première installation sur site.

Le moteur à fins de course automatiques conforme à l'invention requiert une alimentation permanente de l'électronique de commande.

Aussi, dans le cas d'un moteur à fins de course automatiques à commande filaire, le câblage du moteur doit être spécifique de telle façon à assurer l'alimentation de l'électronique de commande, quel que soit l'état de l'interrupteur inverseur 20. Ce câblage se distingue de l'état de la technique en ce qu'il assure une alimentation de l'électronique de commande, même lorsque l'interrupteur inverseur est dans sa position arrêt.

Avantageusement, l'alimentation permanente de l'électronique de commande du moteur permet de prendre en compte le déplacement du rotor, quelle que soit la position de l'interrupteur inverseur 20, même lorsque celui-ci est dans sa position d'arrêt. L'électronique de commande peut être programmée à cet effet et présenter des moyens pour prendre en compte en permanence le déplacement du rotor, quelle que soit la position de l'interrupteur inverseur 20. Dans le cas d'un glissement de l'organe mobile, par exemple, un registre de position de l'électronique de commande s'incrémente ou se décrémente, même si l'interrupteur inverseur 20 est dans sa position d'arrêt.

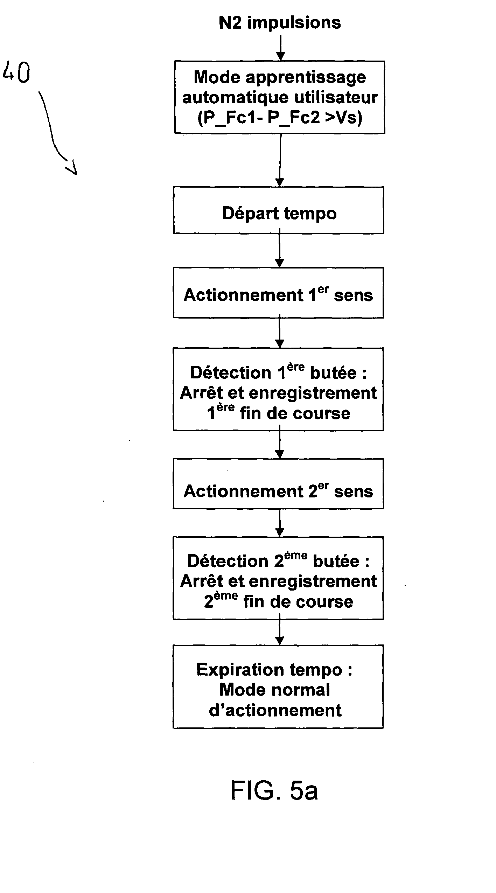

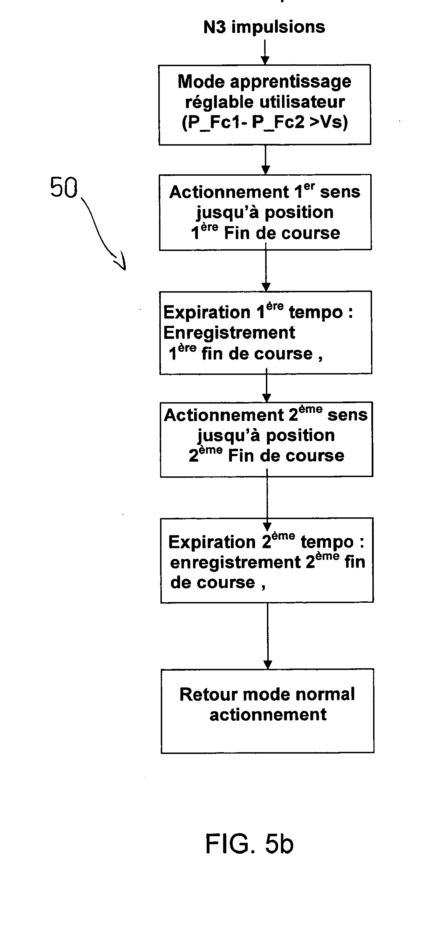

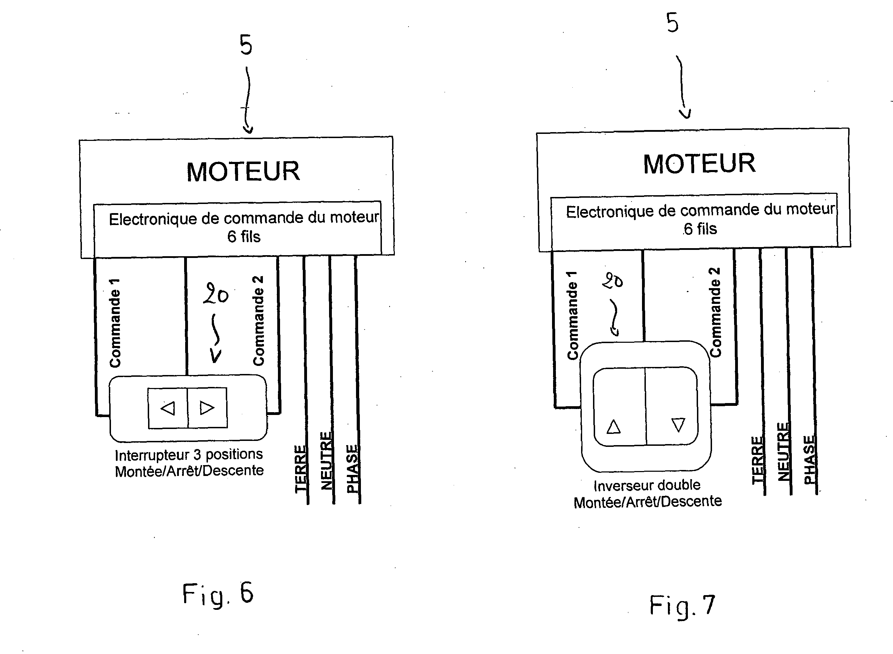

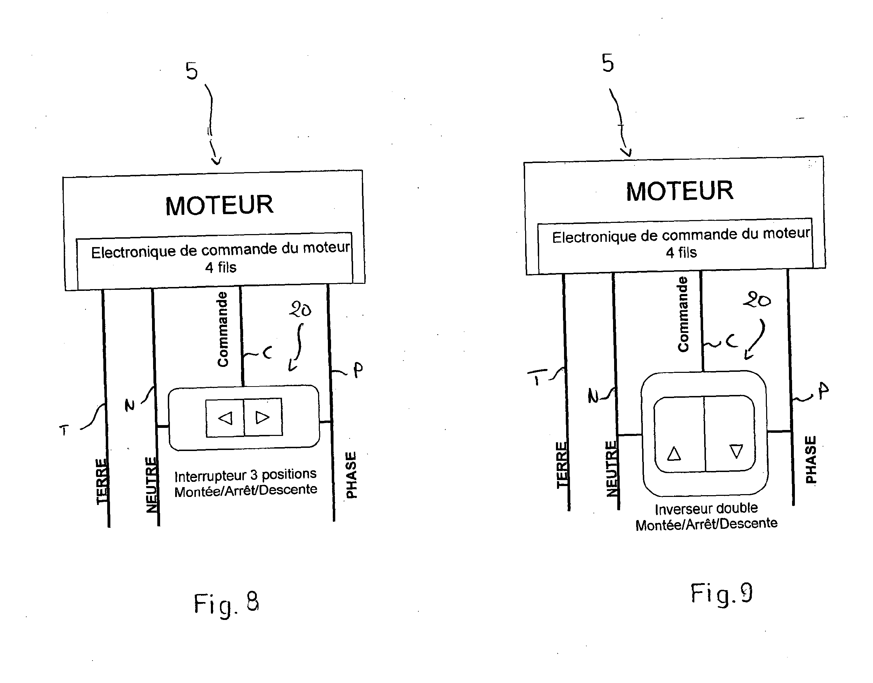

Les figures 5 et 6, ou encore les figures 7 et 8 illustrent deux modes de réalisation de câblage possibles. Ces deux modes de réalisation se distinguent par le nombre de fils de commande utilisés. Ils permettent tous une alimentation continue de l'électronique de commande.

Le mode de réalisation des figures 7 et 8 se distingue par un unique fil de commande. L'interrupteur (double à la figure 8 ou à trois positions à la figure 7) permet ainsi d'assurer un contact électrique, soit entre la ligne de phase P et la ligne de commande, soit entre la ligne de neutre N et la ligne de commande, pour commander le moteur dans un sens ou dans l'autre, ou encore de n'autoriser aucun contact pour maintenir le moteur à l'arrêt.

L'électronique de commande, plus particulièrement le circuit électronique, présente ainsi des moyens pour détecter la phase et le neutre. Lorsque la phase est détectée, le circuit électronique actionne un relais pour provoquer la rotation du moteur dans un sens. Lorsque le neutre est détecté, le circuit électronique actionne un autre relais pour provoquer la rotation du moteur dans l'autre sens.

On notera que ce mode de réalisation nécessite un câblage 5 comprenant trois fils au minimum, dans le cas d'un système monophasé, le cas échéant 4 lorsque la terre est nécessaire.

Le mode de réalisation des figures 5 et 6 se distingue par trois fils de commande. Avantageusement, selon ce mode de réalisation, ces trois fils peuvent être alimentés en très basse tension par l'électronique de commande. Par exemple, l'un des fils de commande (central sur les figures) peut être alimenté en tension continue par le circuit électronique à une tension V. L'interrupteur V assure un contact électrique, soit entre ce fil et le fil de commande 1, soit entre ce fil et le fil de commande 2, pour respectivement assurer la commande du moteur dans un sens ou dans l'autre grâce à deux relais, ou encore par une position sans contact (moteur à l'arrêt). Le circuit électronique actionne le moteur dans un sens si la tension V est détectée sur le fil de commande 1 et dans l'autre si la tension V est détectée sur le fil de commande 2.

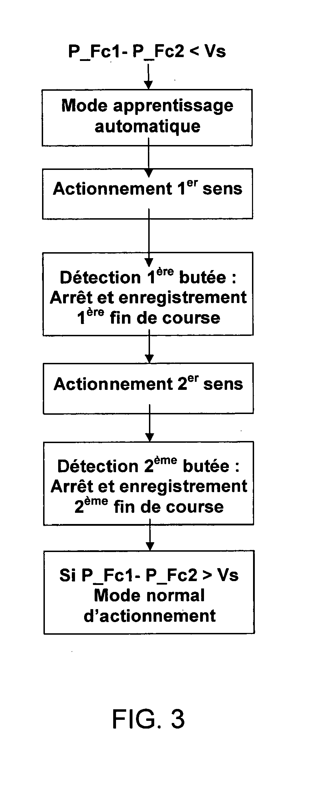

Le diagramme de la figure 3 illustre un mode de réalisation du mode d'apprentissage automatique des fins de course conformes à l'invention. Ce mode est déclenché lorsque l'écart entre les deux positions de fins de course (P-Fc1 et P-Fc2) est inférieur à la valeur seuil Vs d'écart déterminée. Le mode d'apprentissage automatique des fins de course obéissant aux étapes suivantes :
- actionnement du moteur dans un premier sens sous la commande de l'opérateur,
- détection de la première butée physique interprétée notamment comme la chute de vitesse du rotor ; le circuit électronique provoque l'arrêt de l'organe mobile et enregistre la première position de fin de course en mettant notamment à zéro un registre de position,
- actionnement du moteur dans un deuxième sens sous la commande de l'opérateur, le registre s'incrémentant sous le déplacement du rotor,
- détection de la deuxième butée physique, notamment interprétée comme la chute de la vitesse du rotor, le circuit électronique arrête et enregistre la deuxième position de fin de course en recopiant notamment la valeur du registre dans une deuxième mémoire ou registre,
- lorsque l'écart des positions de fins de course est supérieur à la valeur de seuil enregistrée dans un troisième registre, l'électronique de commande passe en mode normal d'actionnement de l'organe mobile.

En mode normal d'actionnement, le registre de position dénommé compteur de position en temps réel, est comparé sans cesse à la valeur du deuxième registre mémoire. Lorsque le compteur réel ou premier registre, est à quelques unités, soit de la valeur zéro (proche de la première fin de course), soit de la valeur de la deuxième mémoire (proche de la deuxième fin de course), le circuit électronique coupe l'alimentation des bobinages du moteur afin d'éviter des efforts trop importants lorsque l'organe mobile rencontre les butées physiques.

Avantageusement, selon un mode de réalisation, le moteur peut présenter, en outre, un mode de fonctionnement spécifique destiné à l'atelier, et plus particulièrement un mode d'actionnement atelier 30 au cours duquel le moteur peut être actionné sans enregistrement des fins de course, sans passer en mode d'apprentissage des fins de course, même si l'écart entre les positions des fins de course est inférieur à la valeur seuil V_{S}. Ledit moteur présente alors des moyens pour déclencher ce mode de fonctionnement spécifique.

Par ailleurs, s'il s'agit du mode normal d'actionnement, ou encore, le cas échéant, du mode d'actionnement atelier 30, l'électronique de commande peut être programmée pour provoquer l'arrêt de l'organe mobile dès la détection d'un obstacle sans passer en mode d'apprentissage des fins de course, et donc sans modification des fins de course afin d'éviter l'altération du moteur.

Afin de permettre la reprogrammation des fins de course par l'utilisateur final, ledit moteur peut présenter, en outre, un mode 40 ; 50 d'apprentissage des fins de course utilisateur, permettant l'enregistrement de fins de course, même si l'écart de position entre les fins de course est supérieur à ladite valeur seuil Vs. Le moteur présente des moyens pour déclencher ce mode de fonctionnement spécifique destiné à l'utilisateur.

Plus particulièrement, le moteur peut présenter deux modes de fonctionnement spécifiques destinés à l'utilisateur, et plus particulièrement deux modes d'apprentissage des fins de course utilisateur, à savoir un mode 40 d'apprentissage des fins de course automatiques et un mode 50 d'apprentissage des fins de course réglable.

Dans le mode 40, le repérage et l'enregistrement des fins de course se fait automatiquement par la détection automatique de butées physiques.

Dans le mode 50, manuel, le repérage et l'enregistrement des fins de courses sont provoqués par des commandes de l'utilisateur.

Dans le cas d'un moteur à commande filaire avec interrupteur inverseur 20, les moyens pour déclencher le ou les modes de fonctionnement spécifiques peuvent être constitués par le circuit électronique et plus particulièrement par des moyens de détection de changement d'état de l'interrupteur inverseur. Le circuit électronique présente ainsi des moyens pour passer dans le mode de fonctionnement spécifique lors de la détection d'un nombre déterminé d'appuis fugitifs rapprochés, de type impulsions, sur l'interrupteur inverseur 20. Le nombre d'appuis est supérieur à un. Dans le cas d'une pluralité de modes de fonctionnement spécifique, chaque mode est déclenché par un nombre d'appuis rapprochés distincts.

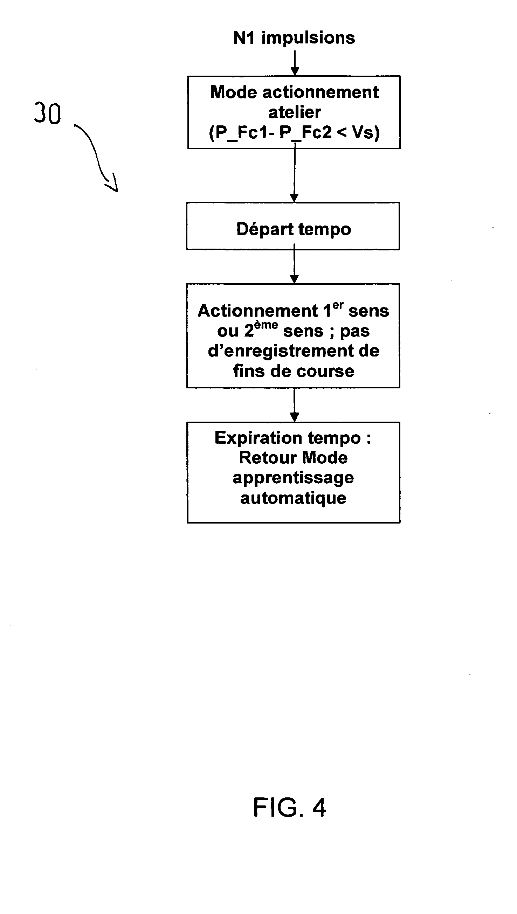

Par exemple, selon les exemples des figures 4, 5a et 5b, N₁ appuis fugitifs rapprochés permettent de déclencher le mode d'actionnement atelier, lorsque N₂ appuis fugitifs rapprochés provoquent le passage en mode d'apprentissage automatique des fins de course utilisateur et N₃ appuis fugitifs rapprochés provoquent le passage en mode d'apprentissage des fins de course réglables utilisateur (avec N₁ ≠ N₂ ≠ N₃). De préférence N₁>N₂ et N₁>N₃.

Plus particulièrement un exemple de réalisation du mode d'apprentissage des fins de course utilisateur est illustré à la figure 5a.

Selon cet exemple de la figure 5a, N₂ impulsions sur l'interrupteur inverseur 20 provoquent le passage en mode utilisateur d'apprentissage automatique des fins de course, le procédé d'apprentissage comprenant ensuite les étapes suivantes :
- départ d'une temporisation,
- actionnement de l'organe mobile dans un premier sens par l'opérateur,
- détection de la première butée physique, l'organe mobile étant arrêté par le circuit électronique (coupure d'alimentation des bobinages du moteur), la position de la première fin de course est enregistrée, notamment par la mise à zéro d'un registre de position apte à s'incrémenter ou se décrémenter,
- actionnement de l'organe mobile dans le deuxième sens par l'opérateur, le registre de position s'incrémentant selon les impulsions d'un codeur angulaire du moteur en fonction du déplacement de l'organe mobile,
- détection de la deuxième butée physique, le circuit électronique provoquant l'arrêt du moteur (coupure alimentation bobinage moteur), et l'enregistrement de la deuxième fin de course, notamment en copiant la valeur du registre de position dans un deuxième registre ou mémoire,
- à l'expiration de la temporisation, le circuit électronique provoque le retour en mode normal d'actionnement.

Dans le mode normal d'actionnement, la valeur du premier registre continue à s'incrémenter et se décrémenter avec le déplacement de l'organe mobile, il est comparé sans cesse à la valeur de la deuxième mémoire. Lorsque le compteur de position réel atteint une valeur de quelques unités supérieures à zéro, c'est-à-dire que l'organe mobile est à une fraction de tour de la première fin de course, le circuit électronique provoque l'arrêt du moteur (coupure débobinage du moteur). Lorsque la valeur du registre de position est à quelques unités de la valeur de la deuxième mémoire, le circuit électronique provoque l'arrêt du moteur (coupure alimentation bobinage du moteur), afin d'éviter que l'organe mobile ne bute fortement sur la butée physique haute.

Selon l'exemple de la figure 5b, N₃ impulsions sur l'interrupteur inverseur 20 provoquent le passage en mode d'apprentissage des fins de course réglables utilisateur.

L'apprentissage manuel des fins de course est alors réalisé par l'utilisateur selon les étapes suivantes :
- actionnement dans un premier sens en appuyant sur l'interrupteur inverseur (par un ou plusieurs appuis) jusqu'à la position des fins de course désirée, par exemple, le point bas,
- à l'expiration d'une première temporisation d'inaction du moteur, le circuit électronique enregistre la position comme première position de fin de course, notamment en mettant à zéro un registre de position,
- actionnement dans un deuxième sens par l'utilisation en appuyant sur l'interrupteur inverseur (par un ou plusieurs appuis) jusqu'à la deuxième position de fin de course désirée ; au cours de cet actionnement le registre de position s'incrémente selon le déplacement de l'organe mobile,
- à l'expiration d'une deuxième temporisation d'inaction du moteur, le circuit électronique provoque l'enregistrement de la position haute comme deuxième position de fin de course, et copie la valeur du registre dans une deuxième mémoire ou registre,
- une temporisation de sortie permet alors le retour en mode normal d'actionnement.

Avantageusement, chaque enregistrement des fins de course peut être signalé par l'électronique de commande du moteur, en actionnant l'organe mobile suivant un aller-retour.

Par exemple, s'il s'agit de la fin de course haute, l'enregistrement est signalé par une rotation de descente du rotor puis une rotation en montée.

S'il s'agit de la fin de course basse, l'enregistrement est signalé par une rotation de montée suivie d'une rotation de descente du rotor.

En mode normal d'actionnement, la valeur du premier registre (compteur de position réelle) s'incrémente ou se décrémente en fonction des déplacements de l'organe mobile et est comparée sans cesse à la valeur de la deuxième mémoire. Lorsque le compteur est à zéro (fin de course basse), on atteint la valeur de la deuxième mémoire (fin de course haute), l'électronique de commande arrête le moteur.

Avantageusement, dans le cas d'un moteur à commande filaire, le moteur peut comprendre un outil amovible destiné à remplacer l'interrupteur inverseur 20. Cet outil se connecte en le ou les fils de commande du moteur et présente des moyens pour générer une série d'impulsions (N₁ dans le cas de l'exemple de la figure 3) dont le nombre permet le déclenchement du mode d'actionnement atelier lors d'un seul appui sur un bouton de l'outil.

Selon un autre mode de réalisation le moteur peut être à commande radio, équipé d'une télécommande. Lesdits moyens pour déclencher le ou les modes de fonctionnement spécifiques sont alors constitués par ladite télécommande. Outre les touches d'actionnement montée, descente et arrêt, la télécommande peut présenter des moyens pour émettre un signal codé par chaque mode spécifique de fonctionnement (modes atelier et utilisateur).

Le circuit électronique dudit moteur présente alors des moyens de réception et de démodulation de chaque signal codé.

Par exemple un commutateur (deep switch) de la télécommande permet de faire fonctionner les touches pour l'actionnement normal du moteur (1ere position du commutateur) ou encore de provoquer le passage d'un mode de fonctionnement spécifique (2^{ème} position de commutateur).

Par exemple, sur la deuxième position du commutateur, le moteur fonctionne en mode d'actionnement atelier, tant que l'écart est inférieur à la valeur seuil Vs, ou encore, en mode d'apprentissage automatique des fins de course si l'écart de position entre les fins de course est supérieur à la valeur seuil Vs.

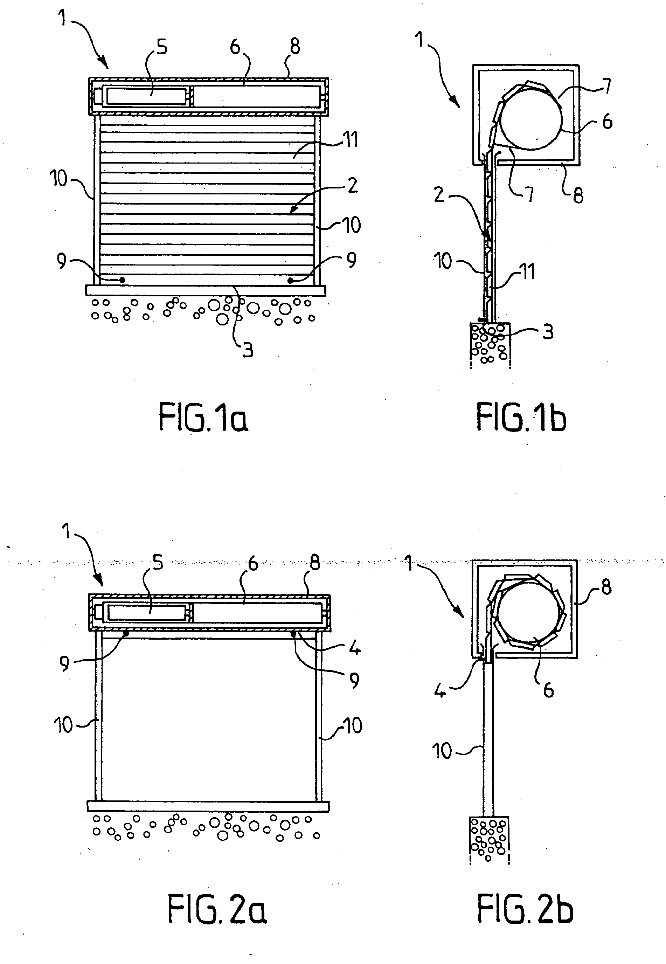

Le moteur à gestion électronique des fins de course peut faire partie d'un dispositif d'ouverture et de fermeture tel qu'un volet roulant illustré aux figures 1a, 1b, 2a et 2b.

Selon l'exemple illustré, il peut s'agir d'un volet roulant comportant un tambour d'enroulement autour duquel s'enroule un tablier 2 de volet roulant. Le tambour est mû par le moteur 5 à fins de course automatiques, notamment tubulaire et logé dans le tambour 6. Des coulisses 10 permettent de guider les lames 11 du tablier. En outre, le volet roulant comporte entre l'extrémité supérieure du tablier de volet roulant et le tambour d'enroulement 6, un verrou d'attache, interdisant, d'une part, le relevage frauduleux du tablier, permettant d'autre part au moteur 5 de se bloquer lorsque le tablier atteint la butée basse 3, tel qu'illustré aux figures 1a et 2a notamment. La dernière lame du volet roulant est équipée de deux arrêts 9 venant coopérer avec la butée haute 4, matérialisée par la sous-face d'un coffre 8 de volet roulant, notamment PVC.

L'invention concernera également un procédé pour l'installation d'un dispositif d'ouverture et de fermeture, tel que notamment un volet roulant comprenant un organe mobile, un moteur à fins de course automatiques conforme à l'invention, pour l'actionnement de l'organe mobile équipé, et de deux butées physiques pour l'organe mobile.

Selon l'invention, le procédé met en oeuvre trois phases de fonctionnement :
- une phase 1, notamment chez le fabricant du moteur, dans laquelle on enregistre deux fins de course pour ledit moteur à fins de course automatiques, de telle façon que l'écart de position entre les fins de course soit inférieur à ladite valeur seuil,
- une phase 2, notamment chez l'assembleur dans laquelle on provoque le passage du moteur dans le mode d'actionnement atelier, et on actionne le moteur dans un sens ou dans l'autre, sans enregistrement ni modification des fins de course,
- une phase 3, notamment sur le site de l'installation dans laquelle on installe le dispositif d'ouverture et de fermeture et on règle de manière automatique les fins de course en commandant vers le haut et vers le bas l'organe mobile jusqu'auxdites butées physiques.

Naturellement, d'autres modes de mise en oeuvre auraient pu être envisagés par l'homme du métier sans pour autant sortir du cadre de l'invention définie par les revendications ci-après.

## Revendications

1. Moteur (5) à gestion électronique des fins de course, destiné à commander un organe mobile, comprenant au moins une électronique de commande avec d'une part, un circuit électronique pour l'enregistrement des fins de course et la gestion desdites fins de course lors de l'actionnement dudit moteur, et d'autre part, des moyens pour détecter le déplacement du rotor dudit moteur, ledit moteur comprenant un mode d'apprentissage des fins de course au cours duquel les fins de courses sont repérées par la détection et la reconnaissance automatiques des positions de deux butées physiques, ainsi qu'un mode normal d'actionnement au cours duquel le circuit électronique provoque l'arrêt du moteur lorsque les positions des fins de course sont approchées par l'organe mobile, **caractérisé en ce que** le câblage dudit moteur assure une alimentation permanente de l'électronique de commande, et **en ce que** ladite électronique de commande est programmée pour comparer l'écart de position entre les deux fins de course et une valeur seuil (Vs) d'écart déterminée afin de basculer ou rester en mode d'apprentissage automatique des fins de course tant que l'écart de position entre les deux fins de course mémorisées est inférieur à ladite valeur seuil (Vs) d'écart déterminée, ledit moteur étant autrement en mode normal d'actionnement.

2. Moteur selon la revendication 1, présentant, en outre, un mode de fonctionnent spécifique destiné à l'atelier, et plus particulièrement un mode d'actionnement atelier (30) au cours duquel le moteur peut être actionné sans enregistrement des fins de course, sans passer en mode d'apprentissage des fins de course, même si l'écart entre les positions des fins de course est inférieur à la valeur seuil (Vs), ledit moteur présentant des moyens pour déclencher le mode de fonctionnement spécifique.

3. Moteur selon la revendication 1 ou 2, présentant au moins un mode de fonctionnent spécifique destiné à l'utilisateur et plus particulièrement au moins un mode d'apprentissage des fins de course utilisateur (40;50) permettant la modification et l'enregistrement des fins de courses même si l'écart entre les positions des fins de course est supérieur à la valeur seuil (Vs), ledit moteur présentant des moyens pour déclencher le mode de fonctionnement spécifique.

4. Moteur selon la revendication 3, présentant deux modes de fonctionnement spécifiques destinés à l'utilisateur et plus particulièrement deux modes d'apprentissage des fins de course utilisateur, à savoir un mode (40) d'apprentissage des fins de course automatiques et un mode (50) d'apprentissage des fins de course réglables.

5. Moteur selon l'une des revendications 1 à 4, dans lequel en mode normal d'actionnement ou, le cas échéant, en mode d'actionnement atelier, l'électronique de commande, provoque la coupure d'alimentation des bobinages dudit moteur dès la détection d'un obstacle, sans passer en mode d'apprentissage des fins de course, sans enregistrement des fins de course.

6. Moteur selon l'une des revendications 2 à 4, à commande filaire équipé d'un interrupteur inverseur (20), dans lequel lesdits moyens pour déclencher le ou les mode(s) de fonctionnement spécifique(s) sont constitués par le circuit électronique et plus particulièrement des moyens de détection de changement d'état de l'interrupteur inverseur (20), le circuit électronique présentant des moyens pour passer dans le mode de fonctionnement spécifique lors de la détection d'un nombre déterminé d'appuis fugitifs rapprochés sur l'interrupteur inverseur (20), supérieur à un, le cas échéant distinct dans le cas d'une pluralité de modes de fonctionnement spécifiques.

7. Moteur selon les revendication 2 et 6, équipé d'un outil amovible destiné à l'atelier, prévu pour remplacer l'interrupteur inverseur, présentant des moyens pour générer une série d'impulsions dont le nombre permet le déclenchement du mode d'actionnement atelier (30) lors d'un seul appui sur un bouton dudit outil.

8. Moteur selon la revendication 6, à commande filaire, dans lequel l'électronique de commande, plus particulièrement ledit circuit électronique présente des moyens pour prendre en compte en permanence le déplacement du rotor, quelle que soit la position de l'interrupteur inverseur (20).

9. Moteur selon la revendication 2 à 4, à commande radio, équipé d'une télécommande dans lequel lesdits moyens pour déclencher le ou les mode(s) de fonctionnement spécifique(s) sont constitués par ladite télécommande présentant des moyens pour émettre un signal codé pour chaque dit mode spécifique de fonctionnement, le circuit électronique dudit moteur présentant des moyens de réception et de démodulation de chaque signal codé.

10. Procédé pour l'installation d'un dispositif d'ouverture et de fermeture, tel que notamment un volet roulant, comprenant un organe mobile, un moteur à gestion électronique des fins de course selon la revendication 2, pour l'actionnement de l'organe mobile et deux butées physiques pour l'organe mobile , procédé mettant en oeuvre trois phases de fonctionnement :
- phase 1 : on enregistre deux fins de course pour ledit moteur à fins de course automatiques, de telle façon que l'écart de position entre les fins de course soit inférieur à ladite valeur seuil,
- phase 2 : on provoque le passage du moteur dans le mode atelier d'actionnement, et on actionne le moteur dans un sens ou dans l'autre, sans enregistrement ni modification des fins de course,
- phase 3 : on installe le dispositif d'ouverture et de fermeture et on règle de manière automatique les fins de course en commandant vers le haut et vers le bas l'organe mobile jusqu'auxdites butées physiques.
